# FASCICULE DE BREVET EUROPEEN

(11) **EP 4 089 358 B1**
(45) Date de publication et mention de la délivrance du brevet: **20.12.2023**
(21) Numéro de dépôt: 22169464.9
(22) Date de dépôt: 22.04.2022
(51) Int. Cl.: F28D 9/00, F28F 19/01

(54) **ECHANGEUR DE CHALEUR COMPRENANT AU MOINS UN FILTRE À PARTICULES DANS UN OU PLUSIEURS DE SES PASSAGES**
WÄRMETAUSCHER MIT PARTIKELFILTER IN EINEM ODER MEHREREN KANÄLEN
HEAT EXCHANGER WITH PARTICLES FILTER IN ONE ODER MORE OF ITS CHANNELS

(30) Priorité: 12.05.2021 FR 2105021
(43) Date de publication de la demande: 16.11.2022
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: MASLIAH, Eric, 94400 VITRY SUR SEINE (FR); GUEGUEN, Arnaud, 94400 VITRY SUR SEINE (FR); LEBAIN, Gilles, 94400 VITRY SUR SEINE (FR); AMANT, Ludovic, 94400 VITRY SUR SEINE (FR)
(74) Mandataire: Air Liquide

(56) Documents cités:
- EP-A1- 0 460 872
- CN-A- 109 595 958
- US-A1- 2009 159 249
- US-A1- 2021 041 190

## Description

La présente invention concerne un échangeur de chaleur, en particulier un échangeur du type à plaques et ailettes brasées, comprenant au moins un filtre permettant de limiter l'introduction de particules indésirables dans le corps de l'échangeur ou de maintenir des particules remplissant une fonction particulière dans ledit corps de l'échangeur. La présente invention concerne en particulier un échangeur de chaleur tel que défini par le préambule de la revendication 1, et tel que divulgué dans le document CN 109 59 59 58.

La présente invention trouve notamment application dans le domaine de la liquéfaction de l'hydrogène. En particulier, l'invention peut s'appliquer à un échangeur de chaleur catalytique dans lequel un débit d'hydrogène gazeux est refroidi, voire liquéfié en tout ou partie, par échange de chaleur avec un débit de fluide frigorigène ainsi qu'au procédé de refroidissement et/ou de liquéfaction mettant en oeuvre ledit échangeur.

La présente invention s'applique aussi à la séparation de gaz par cryogénie, en particulier à la séparation d'air par distillation cryogénique. En particulier, la présente invention peut s'appliquer à un échangeur de chaleur qui vaporise un débit liquide, par exemple de l'oxygène liquide, de l'azote et/ou de l'argon par échange de chaleur avec un débit gazeux, par exemple l'air ou l'azote.

La présente invention peut également s'appliquer à un échangeur de chaleur qui vaporise au moins un débit de mélange liquide-gaz, par exemple un mélange d'hydrocarbures, par échange de chaleur avec au moins un autre fluide à liquéfier, tel du gaz naturel.

Une technologie couramment utilisée pour les échangeurs de chaleur est celle des échangeurs à plaques brasées, qui permettent d'obtenir des organes très compacts offrant une grande surface d'échange et de faibles pertes de charge. Ces échangeurs comprennent un ou plusieurs corps d'échange formés d'un ensemble de plaques parallèles entre lesquelles peuvent être insérées des éléments intercalaires, tels des structures ondulées ou ondes, qui forment des structures d'échange thermique à ailettes. Les plaques empilées forment entre elles un empilement de passages plats pour différents fluides à mettre en relation d'échange thermique. Les échangeurs comprennent des collecteurs de fluide munis de tubulures d'entrée et de sortie pour l'introduction des fluides dans le corps d'échange et l'évacuation des fluides hors du corps d'échange.

Certains échangeurs peuvent nécessiter la mise en place d'un dispositif de filtration des fluides afin de limiter, voire d'éviter, l'introduction dans le corps de l'échangeur de particules solides néfastes aux performances thermiques et hydrauliques de l'échangeur.

Dans d'autres échangeurs, il est nécessaire au contraire de retenir des particules à l'intérieur du corps de l'échangeur. Ces particules peuvent être disposées à l'intérieur des passages du corps d'échange afin d'y assurer différentes fonctions. Dans les échangeurs catalytiques en particulier, les particules sont formées d'un matériau catalyseur produisant une réaction chimique avec le fluide circulant dans les passages.

On connaît notamment des échangeurs catalytiques destinés à la liquéfaction de l'hydrogène dans lesquels la conversion de la molécule ortho-hydrogène en molécule para-hydrogène est effectuée durant la liquéfaction grâce à un catalyseur approprié. Dans ces échangeurs, les collecteurs d'entrée et de sortie pour l'introduction et l'évacuation de l'hydrogène sont généralement formés de dômes recouvrant les ouvertures d'entrée et de sortie de fluide du corps de l'échangeur sur l'intégralité des côtés du corps sur lesquels les dômes sont disposés. Afin de limiter le mouvement des particules de catalyseur dans les passages de l'échangeur, le volume interne des collecteurs d'entrée et de sortie est également rempli de catalyseur, ce qui augmente de façon significative la quantité de catalyseur à utiliser.

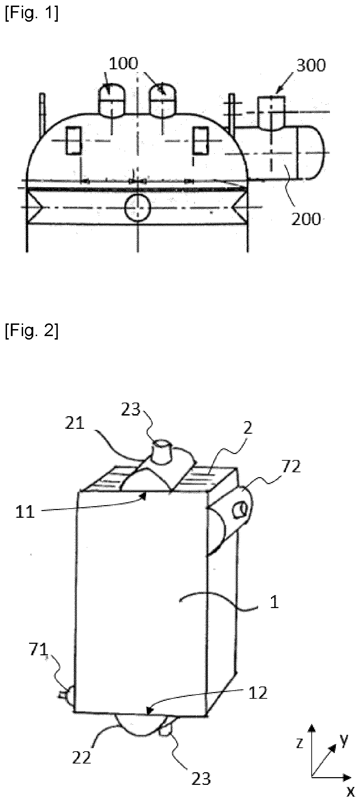

Le remplissage du corps et des collecteurs de l'échangeur est réalisé après que ces éléments aient été brasés entre eux. Un échangeur muni d'un tel dispositif de remplissage est schématisé partiellement sur [Fig. 1]. Le catalyseur est distribué par une ou plusieurs tubulures verticales 100 situées au sommet de l'échangeur et reliées au volume interne d'un collecteur. Le remplissage s'effectue par écoulement gravitaire des particules de catalyseur à travers les tubulures verticales 100 au moyen de buses de distribution spécifiques. Le collecteur est également muni d'une tubulure latérale 200 dans laquelle on insère, avant remplissage avec le catalyseur, des cartouches de filtration de forme cylindrique. Ces cartouches sont formées d'un matériau poreux configuré pour laisser passer le fluide dans les collecteurs mais pour bloquer les particules de catalyseur. Une canalisation d'amenée de fluide 300 est reliée à la tubulure latérale de sorte que le fluide est distribué dans l'échangeur en passant par la cartouche de filtration.

Cette solution conduit à une architecture complexe nécessitant le piquage de nombreuses conduites sur les collecteurs des échangeurs. Outre la complexité de fabrication et de mise en oeuvre des cartouches filtrantes, cette solution augmente inutilement le volume de catalyseur utilisé puisque les collecteurs en sont aussi remplis. Or, les catalyseurs sont des matériaux particuliers et coûteux.

Par ailleurs, l'utilisation de dômes génère une contrainte de largeur d'échangeur à ne pas dépasser. En effet, au regard de la pression de service de certains échangeurs, en particulier des échangeurs du type échangeurs catalytiques, qui peut être élevée, en général comprise entre 25 bar et 60 bar, de larges sections d'échangeurs nécessitent d'avoir des dômes d'autant plus volumineux et formés de tôle de plus grande épaisseur. Du fait des difficultés à fixer de tels dômes sur le corps d'échangeur, la conception et la fabrication de l'échangeur est difficilement envisageable à l'échelle industrielle
De plus, l'introduction du catalyseur dans le corps d'échange est complexe et nécessite un outillage spécifique. L'homogénéité de la distribution des particules de catalyseur entre les différents passages du corps d'échange est difficile à contrôler.

La présente invention a notamment pour but de résoudre tout ou partie des problèmes mentionnés ci-avant, en proposant un échangeur de chaleur muni d'un dispositif de filtration qui soit de conception et de mise en oeuvre plus simple que dans l'art antérieur, qui permette, en particulier lorsque l'échangeur est destiné à la mise en oeuvre de réactions catalytiques, un maintien du catalyseur dans les passages et un remplissage des passages plus simple et mieux contrôlé, ainsi qu'une quantité de catalyseur à utiliser réduite, et qui permette en outre de simplifier la conception et la fixation de tout ou partie des collecteurs d'entrée et de sortie de fluide.

Une solution selon l'invention est alors un échangeur de chaleur comprenant un empilement de plusieurs plaques parallèles entre elles et à une direction longitudinale, lesdites plaques étant empilées avec espacement de façon à définir entre elles une première série de passages pour l'écoulement d'au moins un premier fluide suivant une direction globale d'écoulement parallèle à la direction longitudinale, chaque passage étant délimité par des barres de fermetures disposées entre les plaques, caractérisé en ce qu'un dispositif filtrant est agencé dans au moins un passage de la première série, ledit dispositif filtrant s'étendant d'une part entre deux plaques adjacentes définissant ledit passage et d'autre part entre deux des barres de fermetures délimitant ledit passage, ledit dispositif filtrant comprenant un matériau métallique en feuille choisi parmi une toile métallique, un non-tissé de fibres métalliques, un fritté de poudre métallique ou de fibres métalliques, une mousse métallique, une plaque microperforée.

Selon le cas, l'échangeur selon l'invention peut comprendre l'une ou plusieurs des caractéristiques énoncées ci-dessous.

L'échangeur comprend au moins un premier collecteur d'entrée ou de sortie configuré pour l'introduction ou la récupération du premier fluide dans ou depuis les premiers passages, une structure de distribution et une structure d'échange étant agencées consécutivement depuis le premier collecteur d'entrée ou de sortie dans ledit au moins un passage, le dispositif filtrant étant agencé entre la structure de distribution et la structure d'échange.

L'échangeur comprend au moins un premier collecteur d'entrée ou de sortie configuré pour l'introduction ou la récupération du premier fluide dans ou depuis les premiers passages, une structure de distribution et une structure d'échange étant agencées consécutivement depuis le premier collecteur d'entrée ou de sortie dans ledit au moins un passage, le dispositif filtrant étant agencé entre la structure de distribution et le premier collecteur d'entrée ou de sortie.

Ledit au moins un passage comprend une ouverture d'entrée ou de sortie débouchant dans ledit premier collecteur d'entrée ou de sortie, ledit au moins un passage ayant une largeur mesurée parallèlement à une direction latérale qui est perpendiculaire à la direction longitudinale et orthogonale aux plaques, la largeur de l'ouverture d'entrée ou de sortie, mesurée parallèlement à la direction latérale représente entre 10 et 70%, de préférence entre 20 et 50 %, de la largeur du passage.

Le dispositif filtrant comprend deux extrémités agencées chacune dans un évidement respectif d'une barre de fermeture.

Ledit évidement présente une largeur maximale mesurée parallèlement à la direction longitudinale et comprend une première portion ménagée sur une hauteur maximale correspondant à la hauteur de la barre, lesdites hauteurs étant mesurées parallèlement à une direction d'empilement perpendiculaire aux directions longitudinale et latérale, ladite première portion étant ménagée sur une largeur minimale inférieure à la largeur maximale, ledit évidement comprenant en outre au moins une deuxième portion ménagée sur une hauteur minimale inférieure à la hauteur maximale et s'étendant sur la largeur maximale.

Le dispositif filtrant comprend au moins une face avant agencée perpendiculairement à la direction globale d'écoulement du premier fluide, ladite face avant étant reliée à au moins une face latérale agencée parallèlement à une plaque.

Le dispositif filtrant présente une largeur totale, mesurée parallèlement à la direction longitudinale, comprise entre 2 et 10 mm, de préférence entre 3 et 7 mm.

Le matériau métallique en feuille présente une épaisseur de 0,20 à 0,75 mm, de préférence comprise entre 0,3 et 0,5 mm.

Le matériau métallique en feuille présente une densité surfacique d'ouverture allant de 15 à 35 % ou une densité volumique de pores allant de 75 à 98 %.

Le matériau métallique en feuille est un tissé de fils métalliques, lesdits fils ayant un diamètre de 0,10 à 0,30 mm, de préférence de 0,10 à 0,25 mm.

Le matériau métallique en feuille comprend au moins une série de premiers fils métalliques et une série de deuxièmes fils entrelacés de façon à former des mailles, chaque maille étant délimitée entre deux premiers fils consécutifs et deux deuxièmes fils consécutifs, les mailles ayant une ouverture de 0,07 mm à 0,15 mm.

Le matériau métallique en feuille est une plaque microperforée d'une pluralité d'orifices dont la dimension, mesurée dans un plan parallèle aux plaques est au plus comprise entre 0,07 mm et 0,15 mm.

L'échangeur est un échangeur-réacteur configuré pour la mise en oeuvre de réactions catalytiques entre le premier fluide et au moins un matériau catalyseur, au moins une partie des passages de la première série contenant des particules dudit au moins un matériau catalyseur.

Le matériau catalyseur comprend des particules ayant un diamètre équivalent allant d'un diamètre minimal à un diamètre maximal, le matériau métallique en feuille étant un tissé de fils métalliques ayant une ouverture de maille allant de 10 à 85 % dudit diamètre minimal des particules.

L'échangeur est configuré pour la liquéfaction de l'hydrogène en tant que premier fluide, le matériau catalyseur étant configuré pour la conversion de l'ortho-hydrogène en para-hydrogène, en particulier le matériau catalyseur est de l'oxyde de fer.

L'invention concerne également un procédé de refroidissement et/ou de liquéfaction d'au moins une partie d'un courant d'hydrogène gazeux contre un courant de fluide frigorigène, lesdits courants étant introduit respectivement dans les premiers passages et les deuxièmes passages d'un échangeur selon l'invention.

En particulier, le procédé selon l'invention met en oeuvre une transformation d'au moins une partie des molécules ortho-hydrogène du courant d'hydrogène gazeux en molécules para-hydrogène au moyen de particules d'au moins un matériau catalyseur.

En particulier, le courant d'hydrogène gazeux a une pression allant de 20 à 80 bar, de préférence de 25 à 40 bar.

L'invention va maintenant être mieux comprise grâce à la description qui va suivre, donnée à titre d'exemple illustratif et non limitatif et faite en référence aux figures ci-annexées.
[Fig. 1] est une vue partielle d'un échangeur avec dispositif de filtration selon l'art antérieur.
[Fig.2] est une vue tridimensionnelle d'un échangeur de chaleur selon un autre mode de réalisation de l'invention.
[Fig.3] est une vue tridimensionnelle d'un échangeur de chaleur selon un autre mode de réalisation de l'invention.
[Fig.4] montre une vue partielle en coupe longitudinale d'un passage d'un échangeur de chaleur selon un mode de réalisation de l'invention.
[Fig.5] montre une vue partielle en coupe longitudinale d'un passage d'un échangeur de chaleur selon un autre mode de réalisation de l'invention.
[Fig.6] représente des dispositifs filtrants selon des modes de réalisation de l'invention.
[Fig.7] représente des dispositifs filtrants selon des modes de réalisation de l'invention.
[Fig.8] montre une vue tridimensionnelle partielle d'un évidement selon un mode de réalisation de l'invention.
[Fig.9] montre une vue partielle en coupe longitudinale d'un évidement selon un mode de réalisation de l'invention.
[Fig. 10] schématise la structure d'un dispositif filtrant selon un autre mode de réalisation de l'invention.

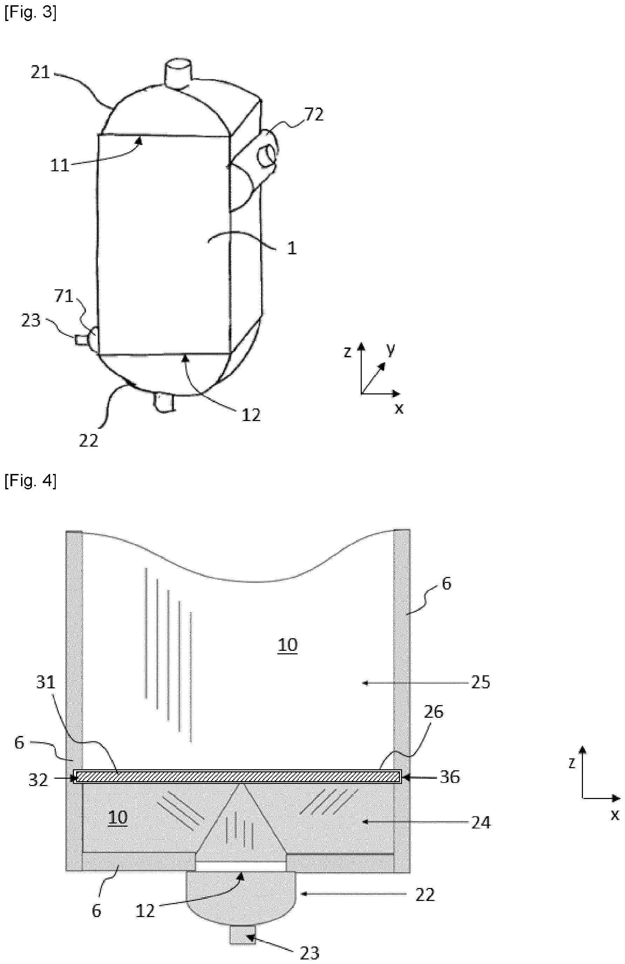

En référence à [Fig. 2] ou [Fig. 3], un échangeur de chaleur selon un mode de réalisation de l'invention est du type à plaques et ailettes brasées. Les éléments constitutifs de l'échangeur sont de préférence formés d'aluminium ou d'alliage d'aluminium. L'échangeur comprend un corps d'échange 1 formé d'un empilement de plaques 2. Les plaques 2 s'étendent suivant deux dimensions, longueur et largeur, respectivement suivant la direction longitudinale z et la direction latérale x. Les plaques 2 sont disposées l'une au-dessus de l'autre, parallèlement entre elles, et avec espacement.

Elles forment ainsi entre elles au moins une première série de passages 10 et une deuxième série de passages 20, les passages 10 de la première série étant prévus pour l'écoulement d'un premier fluide, et les passages de la deuxième série étant prévus pour l'écoulement d'au moins un deuxième fluide à mettre en relation d'échange de chaleur indirect avec le premier fluide via les plaques 2. La direction latérale x est perpendiculaire à la direction longitudinale z et parallèle aux plaques 2. Les fluides s'écoulent de préférence dans la longueur de l'échangeur et globalement parallèlement à la direction longitudinale z, la longueur étant grande devant la largeur de l'échangeur.

L'écart entre deux plaques 2 successives, correspondant à la hauteur d'un passage, mesurée suivant la direction d'empilement y des plaques 2, est petit devant la longueur et la largeur de chaque plaque successive. La direction d'empilement y est orthogonale aux plaques. Les passages 10 peuvent être agencés, en tout ou partie, en alternance ou de façon adjacente avec tout ou partie des passages 20 de la deuxième série. De préférence, au moins une partie des passages 10, 20 comprend des structures d'échange thermique à ailettes, par exemple des structures ondulées, qui s'étendent suivant la largeur et la longueur des passages de l'échangeur, parallèlement aux plaques 2.

Dans un mode de réalisation particulier de l'invention, les passages 10 de la première série et les passages 20 de la deuxième série sont prévus respectivement pour l'écoulement d'hydrogène (H₂) en tant que premier fluide. Le deuxième fluide peut être de l'hydrogène (H₂), de l'hélium (He) ou de l'azote (N₂). De préférence, le deuxième fluide est de l'hydrogène liquide ou de l'hélium liquide, ce qui permet de gagner en efficacité thermique. En particulier, le deuxième fluide peut être de l'hydrogène déjà refroidi, en particulier en tout ou partie liquéfié, provenant d'un autre échangeur du même type que celui objet de l'invention. Lorsque l'échangeur est utilisé pour le refroidissement et/ou la liquéfaction d'hydrogène, l'hydrogène en tant que premier fluide est le fluide calorigène et le deuxième fluide est le fluide frigorigène. Notons que d'autres compositions de fluides peuvent être utilisées pour le fluide frigorigène.

De préférence, chaque passage 10, 20 a une forme parallélépipédique et plate. L'échangeur comprend des barres de fermeture 6 disposées entre les plaques 2, en périphérie des passages. Ces barres 6 assurent l'espacement entre les plaques 2 et l'étanchéité des passages.

De façon connue en soi, l'échangeur comprend des moyens de distribution et d'évacuation 21, 22, 71, 72, appelés collecteurs ou boîtes collectrices, assemblés sur des côtés de l'empilement et configurés pour distribuer les fluides sélectivement dans les passages 10, 20, ainsi que pour évacuer lesdits fluides desdits passages 10, 20. Chaque collecteur présente des parois périphériques délimitant un volume interne, une extrémité ouverte située du côté du corps d'échange et une tubulure 23 adaptée pour l'alimentation ou l'évacuation du fluide dans ou depuis le volume interne.

Les barres de fermeture 6 n'obturent pas complètement les passages mais laissent des ouvertures libres sur les côtés du corps 1 pour l'entrée ou la sortie des fluides correspondants dans les passages. Les ouvertures d'entrée 11 pour l'introduction de chacun des fluides circulant dans l'échangeur sont disposées en coïncidence les unes au-dessus des autres. Les ouvertures de sortie pour l'évacuation de chacun des fluides circulant dans l'échangeur sont disposées en coïncidence les unes au-dessus des autres. Les ouvertures d'entrée 11 des passages 10 de la première série sont réunies fluidiquement dans un premier collecteur d'entrée 21. Les ouvertures de sortie 12 des passages 10 de la première série sont réunies fluidiquement dans un premier collecteur de sortie 22.

Les ouvertures d'entrée des deuxièmes passages 20 sont réunies fluidiquement dans un deuxième collecteur d'entrée 71. Les ouvertures de sortie des deuxièmes passages 20 situées les unes au-dessus des autres sont réunies fluidiquement dans un deuxième collecteur de sortie 72.

Etant précisé que les caractéristiques de l'invention données dans la présente description en lien avec les passages de la première série sont applicables à d'autres passages et qu'une solution de filtration selon l'invention est envisageable pour tout ou partie des fluides circulant dans l'échangeur.

Selon une possibilité illustrée sur [Fig. 2], le ou les collecteurs d'entrée et de sortie 21, 22, 71, 72 sont de forme de têtes semi-tubulaires, i. e. de forme semicylindrique, et ne recouvre que partiellement les côtés du corps sur lesquels ils sont disposés. Des ondes de distribution sont agencées entre les plaques 2 successives sous forme de tôles ondulées qui s'étendent à partir des ouvertures d'entrée ou de sortie et assurent un guidage et une répartition uniforme des fluides sur toute la largeur des passages 10, 20 jusqu'à la zone d'échange thermique des passages.

De préférence, au moins une partie des collecteurs 21, 22, 71, 72 s'étendent suivant la direction d'empilement y sur toute la hauteur du corps 1 et, suivant la direction latérale x, sur une partie de la largeur du corps 1, en regard des ouvertures d'entrée et sortie des passages 10.

Selon une autre possibilité illustrée sur [Fig. 3], le ou les collecteurs d'entrée et/ou de sortie 21, 22, 71, 72 ont une forme de dômes recouvrant totalement les côtés du corps sur lesquels ils sont disposés.

Notons qu'un échangeur selon l'invention peut comprendre à la fois des collecteurs sous forme de dômes et de têtes, en particulier le premier collecteur d'entrée 21 peut être sous forme de dôme et le premier collecteur de sortie 22 sous forme de tête.

Dans les modes de réalisation illustrés, le premier collecteur d'entrée 21 pour le premier fluide et le deuxième collecteur de sortie 72 sont situés à une même extrémité de l'échangeur, les premier et deuxième fluides circulant ainsi à contrecourant dans les passages de l'échangeur. De préférence, la direction longitudinale est verticale lorsque l'échangeur est en fonctionnement. Le premier collecteur d'entrée 21 pour le premier fluide est situé à une extrémité supérieure de l'échangeur et le premier collecteur de sortie 22 pour le premier fluide est situé à une extrémité inférieure de l'échangeur. Le premier fluide s'écoule globalement verticalement et dans le sens descendant, c'est-à-dire opposé à la direction z sur [Fig. 2]. D'autres directions et sens d'écoulement des fluides sont bien entendu envisageables, sans sortir du cadre de la présente invention.

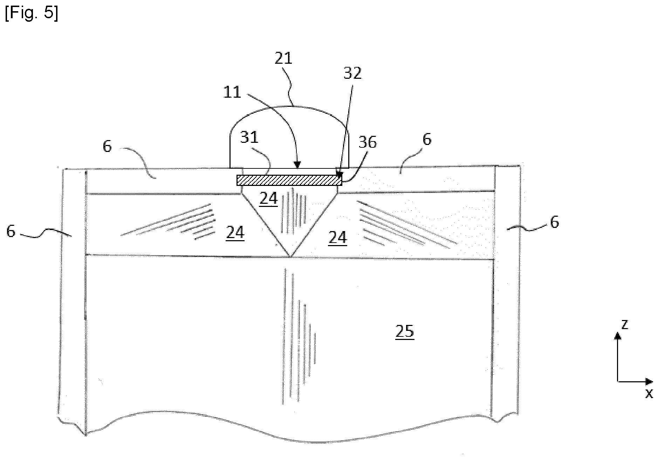

Comme on le voit sur [Fig. 4] ou [Fig. 5] qui montrent des vues en coupe longitudinale d'un passage 10 de la première série, on agence selon l'invention un dispositif filtrant 31 dans au moins un passage 10 de la première série. Le dispositif filtrant 31 s'étend d'une part entre deux plaques 2 adjacentes et d'autre part entre deux des barres de fermetures 6 délimitant ledit passage 10. Le dispositif filtrant 31 comprend un matériau métallique en feuille 30 choisi parmi une toile métallique, un non-tissé de fibres métalliques, un fritté de poudre métallique ou de fibres métalliques, une mousse métallique, une plaque microperforée.

Les termes « toile métallique » s'entendent d'un produit manufacturé obtenu par le tissage de fils métallique, c'est-à-dire l'entrelacement de fils de manière à obtenir une toile tissée métallique, i. e. un tissu métallique. Notons que les termes « toile métallique » peuvent aussi couvrir un produit manufacturé obtenu par le soudage de fils métalliques, i. e. une toile soudée formée de fils qui se croisent et sont soudés par point à l'endroit où ils se croisent.

Par « non-tissé », ou intissé, on entend un produit manufacturé formés de fibres disposées en feuille, orientées de manière aléatoire ou directionnelle, et liées entre elles par des procédés mécaniques, chimiques ou thermiques, ou par combinaison de ces procédés, en excluant le tissage. En particulier, le non-tissé peut être formé de fibres liées par friction, cohésion ou adhésion.

Le terme « fritté » désigne un matériau obtenu par frittage de poudre ou de fibres métalliques, c'est-à-dire par chauffage d'une poudre ou de fibres sans les mener jusqu'à la fusion. Sous l'effet de la chaleur, les grains ou fibres se soudent entre eux, ce qui forme la cohésion du matériau.

Le terme « mousse » désigne une structure alvéolaire formé d'un métal et contenant un volume important de pores.

Une plaque microperforée désigne une plaque comprenant des micro perforations, c'est-à-dire des orifices traversants de dimension micrométrique, c'est-à-dire inférieure au millimètre.

L'utilisation d'une toile métallique, d'un non-tissé de fibres métalliques, d'un fritté métallique, d'une mousse métallique ou d'une plaque microperforée conduit à un matériau dont les ouvertures, ou pores ouverts, peuvent être dimensionnées de façon à permettre l'écoulement du fluide tout en empêchant le passage des particules solides que l'on souhaite retenir dans le corps d'échange ou dont on souhaite éviter l'introduction dans ledit corps. Ces matériaux offrent un bon compromis entre transparence au fluide, efficacité de filtration, grâce au faibles dimensions d'ouvertures qui peuvent être obtenues, et rigidité du filtre.

Grâce à sa structure en feuille, le dispositif filtrant peut être aisément mis en forme, notamment par pliage ou formage dans une presse, de façon à pouvoir être positionné à l'intérieur d'un passage d'échangeur, transversalement à celui-ci, pour y assurer la fonction de blocage de particules. Le dispositif filtrant peut ainsi être positionné au plus près des structures d'échange ou de distribution qui sont agencées dans le passage. Dans le cas d'échangeurs catalytiques, cela permet de réduire significativement le volume de catalyseur utilisé puisque les collecteurs n'ont plus à être remplis de catalyseur.

Il est même envisageable de prévoir des zones de distribution sans catalyseur au sein des passages, ce qui permet d'utiliser des collecteurs de forme semicylindrique. Les têtes semi-cylindriques sont plus simple à fabriquer que les dômes et leur assemblage au corps d'échangeur est moins longue et moins compliquée. L'utilisation de têtes permet aussi d'augmenter la section du corps de l'échangeur et donc de diminuer le nombre de corps d'échangeur à mettre en oeuvre dans une même boîte froide.

L'utilisation d'un dispositif filtrant est particulièrement avantageuse dans un procédé d'échange de chaleur dans lequel au moins le premier fluide a une pression relativement élevée, c'est-à-dire de 20 à 80 bar, en particulier de 25 à 40 bar. En effet, ces pressions nécessitent d'augmenter l'épaisseur du matériau utilisé pour former les collecteurs de fluide. Or pour fixer par soudage les dômes au corps de l'échangeur, l'augmentation de l'épaisseur des tôles de ces dômes nécessite d'augmenter l'épaisseur des barres de fermeture de l'échangeur. Cette contrainte industrielle et économique pose donc une limite dans l'augmentation de la section des échangeurs. Pour des collecteurs en forme de dôme, cela limiterait leur taille, et donc les dimensions du corps de l'échangeur. La zone de distribution aménagée grâce au dispositif filtrant permet, à épaisseur raisonnable, d'augmenter la section des échangeurs et donc de limiter le nombre de corps d'échange nécessaires.

La fabrication et la mise en oeuvre de ces filtres sont aussi simplifiées par rapport à celles des cartouches filtrantes de l'art antérieur. Les dispositifs filtrants peuvent être insérés dans les passages au cours de l'empilement des plaques, avant que celui-ci ne soit brasé. Une fois les filtres assemblés dans l'empilement, celui-ci peut être agencé verticalement pour être rempli gravitairement de catalyseur. Les dispositifs filtrants placés au bas de l'empilement retiennent le catalyseur dans les passages. Cela permet un remplissage plus homogène des passages par le haut de l'empilement.

L'invention permet aussi d'éviter de souder des filtres sur les collecteurs ou le corps, toute opération de soudage sur le corps entraînant un risque de surchauffe et de cohésion des éléments brasés dans l'empilement.

De préférence, un dispositif filtrant tel que décrit dans la présente demande est positionné dans plusieurs passages 10, voire la totalité des passages 10. De préférence, pour tout ou partie des passages 10, un dispositif filtrant est prévu au moins du côté collecteur de sortie 22, voire de chaque côté du passage 10, côté collecteur d'entrée 21 et côté collecteur de sortie 22.

Selon un mode de réalisation, les passages 10 présentent une partie principale de leur longueur constituant la zone d'échange thermique proprement dite, c'est-à-dire la zone où les fluides échangent de la chaleur et/ou réagissent avec un catalyseur le cas échéant. La zone d'échange est de préférence bordée de part et d'autre par des zones de distribution au niveau desquels les fluides sont acheminés depuis ou vers les collecteurs d'entrée ou de sortie. Ces zones de distribution et d'échange sont avantageusement garnies de structures 24, 25 qui s'étendent suivant la largeur et la longueur du passage 10, parallèlement aux plaques 2. Les structures de distribution 24 sont configurées pour diriger et assurer une répartition et une récupération uniformes des fluides sur toute la largeur des zones d'échange, depuis les collecteurs d'entrée ou vers les collecteurs de sortie.

Les structures d'échange et de distribution comprennent avantageusement des ondes ou structures ondulées. Ces structures peuvent être choisies parmi les différents types d'ondes mis en oeuvre habituellement dans les échangeurs du type à plaques et ailettes brasés, tels les ondes droites, les ondes dites à décalage partiel (du type « serrated » en anglais), les ondes à vagues ou arrêtes de hareng (du type « herringbone » en anglais). Ces ondes peuvent être perforées ou non. Les structures peuvent être formées d'un seul tenant ou de plusieurs tapis d'ondes juxtaposés.

Selon un mode de réalisation montré sur [Fig. 4], ledit au moins un passage 10 comprend au moins une structure de distribution 24 et une structure d'échange 25 positionnées consécutivement depuis le premier collecteur de sortie 22. Notons que le même agencement peut être prévu du côté du premier collecteur d'entrée 21. Le dispositif filtrant 31 est agencé entre la structure de distribution 24 et la structure d'échange 25, de préférence dans un espace libre 26 ménagé entre lesdites structures. L'espace libre 26 s'entend d'un espace dépourvu de toute structure d'échange ou de distribution dans le passage 10.

Ce mode de réalisation est particulièrement avantageux pour une utilisation dans un échangeur-réacteur catalytique car il permet de prévoir, entre les collecteurs et les zones d'échange, des zones de distribution sans catalyseur, le dispositif filtrant retenant le catalyseur dans la zone d'échange, là où il est utilisé pour réagir avec le premier fluide. Cela réduit encore la quantité de catalyseur utilisée dans les passages d'échangeur. Cela permet aussi d'utiliser des collecteurs d'entrée et/ou de sortie sous forme de têtes qui ne recouvrent que partiellement les faces de l'empilement, comme illustré sur [Fig. 2]. L'utilisation de têtes peut être avantageuse, comparée à l'utilisation de dômes recouvrant la totalité d'une face d'empilement, car cela réduit l'encombrement des collecteurs, facilite leur assemblage sur le corps de l'échangeur et réduit la durée des opérations de soudage des collecteurs au corps.

De préférence, le dispositif filtrant 31 est agencé à une distance de l'ouverture de sortie 12 du passage 10, ou de l'ouverture d'entrée 11 s'il s'agit d'un dispositif filtrant agencé du côté du collecteur d'entrée 21, comprise entre 10 et 50 cm.

De préférence, le dispositif filtrant 31 s'étend sur une largeur totale, mesurée parallèlement à la direction longitudinale z qui peut être égale ou sensiblement égale, de préférence inférieure, à la largeur de l'espace libre, mesurée de la même façon. De préférence, il existe un jeu relativement faible, voire nul ou quasi-nul ou entre le dispositif filtrant, la structure de distribution 24 et la structure d'échange 25. En particulier, il existe un premier jeu, correspondant à la distance entre le dispositif filtrant 31 et la structure de distribution 24 et/ou à la distance séparant le dispositif filtrant 31 de la structure d'échange 25, mesurée parallèlement à la direction longitudinale z. De préférence, le premier jeu est compris entre 0 et 3 mm, en particulier compris entre 0,5 et 3 mm. On évite ainsi un éventuel passage des particules autour du dispositif filtrant. Par ailleurs, la présence d'un faible jeu peut compenser un éventuel défaut du caractère rectiligne du dispositif filtrant 31.

Dans le mode de réalisation selon [Fig. 4], le dispositif filtrant s'étend entre les deux barres de fermeture 6 qui s'étendent parallèlement à la direction longitudinale z et délimitent chacun un bord longitudinal du passage 10, c'est-à-dire un bord parallèle à la direction longitudinale z. De préférence, le dispositif filtrant 31 présente une longueur, mesurée parallèlement à la direction latérale x égale ou supérieure à la largeur du passage 10.

Avantageusement, la longueur du dispositif filtrant 31 est supérieure à la largeur du passage 10 de sorte que les deux extrémités 32 s'engagent dans chacune des barres de fermetures 6. De préférence, chacune de ces barres de fermeture 6 comprend un évidement 36 conformé pour accueillir une extrémité 32 du dispositif filtrant 31.

Selon un autre mode de réalisation dont un exemple est montré sur [Fig. 5], l'échangeur selon l'invention comprend un dispositif filtrant 31 agencé entre la structure de distribution 24 et le premier collecteur d'entrée ou de sortie 21, 22, de préférence au niveau des ouvertures d'entrée ou de sortie 11, 12 du passage 10.

Le dispositif filtrant 31 est agencé de façon à séparer le volume interne du collecteur de celui du passage 10. Ce mode de réalisation est notamment adapté pour un échangeur où la fonction de filtre est d'éviter l'introduction de particules dès l'entrée dans l'échangeur. Il permet d'utiliser un dispositif filtrant dont la longueur est inférieure à la largeur du passage 10, ce qui réduit la taille du dispositif et facilite sa fabrication. Il suffit que le dispositif filtrant 31 ait une longueur au moins égale à la largeur de l'ouverture ménagée entre les barres de fermetures 6 délimitant le bord latéral du passage sur lequel le collecteur est agencé. Un bord latéral s'entend d'un bord parallèle à la direction latérale x.

La configuration selon [Fig. 4] est particulièrement adaptée dans un échangeur catalytique avec le dispositif filtrant agencé du côté du collecteur de sortie 22 pour retenir le catalyseur. La configuration selon [Fig. 5] peut être adaptée à tout échangeur dans lequel on souhaite bloquer l'introduction de particules solides. Notons que ces considérations n'écartent en rien les autres configurations qui restent envisageables.

De préférence, le dispositif filtrant 31 est agencé entre les deux barres de fermetures 6 qui délimitent le passage 10 au niveau d'un bord latéral. Selon une possibilité, le dispositif filtrant 31 comprend deux extrémités 32 agencées chacune dans un évidement 36 respectif de chaque barre de fermeture 6.

Comme on le voit sur [Fig. 4] ou [Fig. 5], ledit au moins un passage 10 comprend une ouverture d'entrée ou de sortie 11,12 débouchant dans ledit premier collecteur d'entrée ou de sortie 21, 22. Le passage 10 et les ouvertures 11, 12 présente chacune des largeurs mesurées parallèlement à la direction latérale x. De préférence, la largeur de l'ouverture d'entrée ou de sortie 11,12 est inférieure à la largeur du passage 10, en particulier la largeur de l'ouverture d'entrée ou de sortie 11,12 représente entre 10 et 70% de la largeur du passage 10, de préférence entre 20 et 50 %. Cela permet de réduire significativement la largeur du collecteur d'entrée ou de sortie qui recouvre les ouvertures.

Dans le cadre de l'invention, les évidements 36 peuvent prendre la forme notamment de trous borgnes, d'encoches et/ou de rainures ménagées dans les barres 6.

Notons que dans le cas de barres 6 agencées parallèlement à la direction longitudinale z, la largeur des barres est mesurée parallèlement à la direction latérale x. Dans le cas de barres 6 agencées parallèlement à la direction latérale x, la largeur des barres est mesurée parallèlement à la direction longitudinale z. Les barres de fermetures peuvent présenter une largeur comprise entre 15 et 40 mm.

Le dispositif filtrant 31 peut être fixé dans le passage 10 de différentes façons. En particulier, le dispositif filtrant 10 peut être assemblé par brasage à l'une et/ou l'autre des plaques 2 délimitant le passage 10 dans lequel le dispositif filtrant est agencé. Le dispositif filtrant 31 peut aussi être assemblé par liaison adhésive thermique à l'une et/ou l'autre des plaques 2.

De préférence, un matériau de brasage est agencé entre le matériau métallique en feuille 30 et au moins une plaque 2 délimitant le passage 10. Le matériau métallique en feuille 30 a une température de fusion supérieure à la température de fusion du matériau de brasage. Le matériau de brasage peut notamment de présenter sous la forme d'un revêtement déposé sur au moins une partie des surfaces des plaques 2.

En particulier, le matériau métallique en feuille 30 est formé en tout ou partie d'aluminium ou d'un alliage d'aluminium, d'acier, en particulier d'acier inoxydable, de nickel ou d'alliage de nickel, en particulier d'un alliage de type Inconel comprenant de 50% à 75% en poids de nickel. Ces matériaux offrent l'avantage de présenter une bonne résistance mécanique, une bonne ténacité, ainsi qu'une bonne résilience aux températures cryogéniques. Ces propriétés sont appréciables dans le contexte de résistance à la pression dynamique du fluide et rétention du poids du catalyseur notamment lorsque le filtre est situé en partie inférieure de l'échangeur.

En particulier, un dispositif filtrant formé en tout ou partie d'aluminium ou d'un alliage d'aluminium pourra être assemblé par brasage, ce matériau étant brasable avec les autres éléments de l'échangeur qui sont le plus souvent formés d'aluminium ou d'alliage d'aluminium. Si le dispositif filtrant est formé en tout ou partie d'acier inoxydable, il sera préférentiellement lié thermiquement aux plaques 2.

Le dispositif filtrant 31 peut présenter une largeur totale, mesurée parallèlement à la direction longitudinale z, comprise entre 2 et 10 mm, de préférence entre 3 et 7 mm. Cela offre un bon compromis entre la nécessité de résister à la traction liée aux forces de pression s'exerçant dans les passages et la perte de charge générée par le dispositif filtrant. Une largeur comprise entre 3 et 7 mm est particulièrement adaptée à des pressions de fluide comprises entre 20 et 40 bar.

Le dispositif filtrant 31 peut présenter une hauteur, mesurée parallèlement à la direction d'empilement y, égale ou sensiblement égale à la hauteur des barres de fermetures 6 et/ou à la hauteur des structures de distribution et d'échange 24, 25. La hauteur du dispositif filtrant est définie de façon à être égale ou légèrement supérieure à la hauteur du passage 10, de sorte que le dispositif filtrant est en contact avec les plaques 2 adjacentes. En particulier, la hauteur du dispositif filtrant peut être supérieure de 0,05 à 0,2 mm à la hauteur du passage 10.

Le dispositif filtrant 31 peut être mis en forme de différentes façons, en particulier par emboutissage dans une presse ou par pliage du matériau en feuille 30 formant le dispositif filtrant.

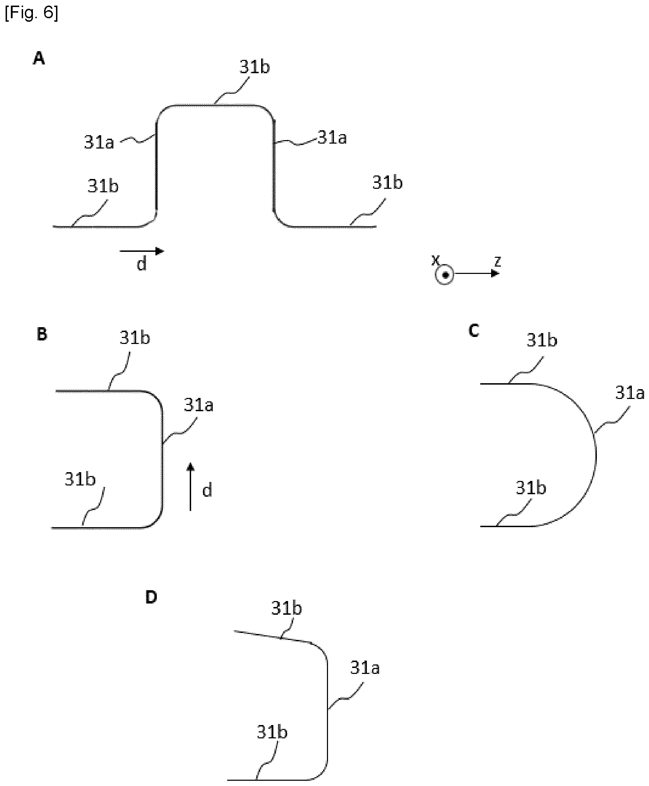

[Fig. 6] schématise des formes possibles du dispositif filtrant 31. Dans les différentes modes de réalisation, le dispositif filtrant 31 comprend de préférence au moins une face avant 31a agencée perpendiculairement à la direction globale d'écoulement du premier fluide. La face avant 31a s'étend parallèlement à la direction latérale x. C'est la face avant 31a qui assure la fonction de barrière de filtration des particules. Elle est reliée à au moins une face latérale 31b qui est agencée parallèlement à une plaque 2. La face latérale 31b sert de surface d'assemblage du dispositif filtrant 10. La face latérale 31b peut être assemblée par brasage ou par collage thermique à la plaque 2. La face avant 31a et la face latérale 31b peuvent être reliées au niveau d'une zone de liaison qui peut présenter un rayon de courbure plus ou moins important selon la technique de formage du dispositif filtrant, notamment par emboutissage ou pliage.

Dans un mode de réalisation schématisé en A sur [Fig. 6], le dispositif filtrant 31 comprend deux faces avant 31a agencées successivement suivant la direction longitudinale z et trois faces latérales 31b, l'une destinée à être agencée contre une des plaques 2 formant le passage 10 et les deux autres destinées à être agencées contre l'autre des plaques 2 formant le passage 10.

Dans un mode de réalisation schématisé en B sur [Fig. 6], le dispositif filtrant 31 comprend une face avant 31a et deux faces latérales 31b destinées chacune à être agencée parallèlement à une plaque 2 adjacente. Les faces latérales 31b peuvent s'étendre à gauche ou à droite de la face avant 31a. Le dispositif filtrant présente un profil transversal en forme de U. Notons que les branches du profil en U peuvent aussi bien s'étendre dans le sens d'écoulement du fluide qu'à l'opposé. Notons que la face avant 31a peut présenter une surface plane, comme schématisé en A ou B, ou courbe, en particulier concave, comme dans l'exemple schématisé en C sur [Fig. 6].

Notons qu'au moins une face latérale 31b peut éventuellement ne pas être perpendiculaire à la face avant 31a mais plutôt former un angle compris entre 90° et 94° avec la face avant 31a, comme par exemple montré en D sur [Fig. 6]. En cas de difficulté à obtenir une hauteur constante sur toute la longueur du dispositif filtrant dans la plage de tolérance recherchée, la face latérale 31b supérieure disposant d'un angle légèrement supérieur à 90° par rapport à la face avant permet d'obtenir une hauteur telle que la tôle séparatrice supérieure, une fois posée dessus, offre une surface de contact avec le dispositif sur toute sa longueur.

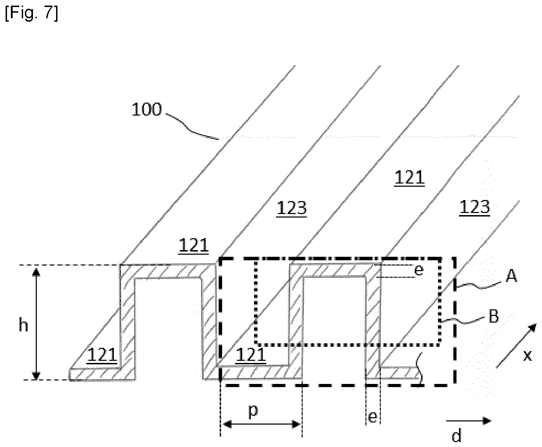

Comme on le voit sur [Fig. 7], le dispositif filtrant 31 peut être formé à partir d'une portion d'un produit ondulé 100 comprenant au moins deux flancs d'onde 123 reliés par un sommet d'onde 121 qui s'étend perpendiculairement auxdits flancs d'onde 123. Les flancs d'onde 123 se succèdent suivant une direction D1 dite d'ondulation et sont agencés périodiquement selon un pas p. Les flancs d'onde 123 et les sommets d'onde 121 ont une épaisseur e préférentiellement comprise entre 0,2 à 0,75 mm.

Le fait de former le dispositif filtrant 31 à partir d'un produit ondulé 100 permet de mutualiser les équipements de fabrication de l'échangeur, en particulier d'utiliser les mêmes outils de presse pour former le dispositif filtrant que ceux utilisés pour former les structures de distribution ou d'échange insérées dans les passages. Plusieurs dispositifs filtrants peuvent être découpés dans un même produit ondulé 100. Le produit ondulé 100 peut par exemple être du même type que celui utilisé pour former la structure de distribution 24 et/ou la structure d'échange 25, en particulier présenter le même profil transversal, le même pas entre les flancs d'onde, la même hauteur. De préférence, le produit ondulé 100 sera du type onde droite mais d'autres formes d'ondes sont envisageables.

Selon une possibilité, le dispositif filtrant 31 comprend au moins deux faces avant 31a formées chacune par un flanc d'onde 123 du produit ondulé 100 et au moins une face latérale 31b formée par un sommet d'onde 121 du produit ondulé 100. En particulier, le dispositif filtrant 31 peut comprendre deux faces avant 31a et trois faces latérales 31b, l'une formée par un sommet d'onde 121 supérieur reliant les extrémités supérieures des flancs d'onde 123 et les deux autres faces latérales 31b formées par deux sommets d'onde 121 inférieurs reliés chacun aux extrémités inférieures des flancs d'onde 123. Ce dispositif filtrant 31 peut être formé par une découpe d'un produit ondulé 100 telle que schématisée par des tirets sur [Fig. 7] et permet d'obtenir un dispositif filtrant du type A sur [Fig. 6]. La découpe peut par exemple être réalisée au niveau d'un sommet d'onde 121 inférieur ou au niveau de la surface de liaison reliant un sommet d'onde 121 inférieur au flanc d'onde 123 adjacent.

Selon une autre possibilité, le dispositif filtrant 31 comprend une face avant 31a formée par un sommet d'onde 121 du produit ondulé 100 et deux faces latérales 31b formées chacune par un flanc d'onde 123 du produit ondulé 100. Ce dispositif filtrant 31 peut être formé par une découpe d'un produit ondulé 100 telle que schématisée par des pointillés sur [Fig. 7] et permet d'obtenir un dispositif filtrant du type B sur [Fig. 6]. La découpe peut par exemple être réalisée au niveau de chaque flanc d'onde 123 ou au niveau des surfaces de liaison reliant chaque flanc d'onde 123 à un sommet d'onde 121 inférieur adjacent. Le dispositif filtrant 31 peut être agencé dans le passage 10 avec la direction d'ondulation D1 perpendiculaire (illustré en B) ou parallèle (non illustré) à la direction longitudinale z.

Selon une possibilité, qui n'est pas montrée en détail, au moins un évidement 36 est formé d'un évidement pratiqué dans une barre 6 sur toute la hauteur de la barre, la hauteur étant mesurée suivant la direction d'empilement y des plaques 2. L'évidement 36 présente une largeur maximale Iₘₐₓ, mesurée parallèlement à la direction longitudinale z, qui est égale ou sensiblement égale, de préférence légèrement supérieure, à la largeur totale du dispositif filtrant 31. L'évidement 36 résulte d'un enlèvement de matière sur une profondeur prédéterminée, mesurée suivant la direction latérale x, et ce sur la largeur maximale Iₘₐₓ et sur une hauteur hₘₐₓ correspondant à la hauteur de la barre 6. L'évidement présente ainsi, dans un plan de coupe parallèle aux plaques 2, un profil transversal de forme identique ou quasiidentique, en particulier de forme carrée ou rectangulaire, depuis la face 6c de la barre 6 donnant dans le passage 10 jusqu'au fond de l'évidement.

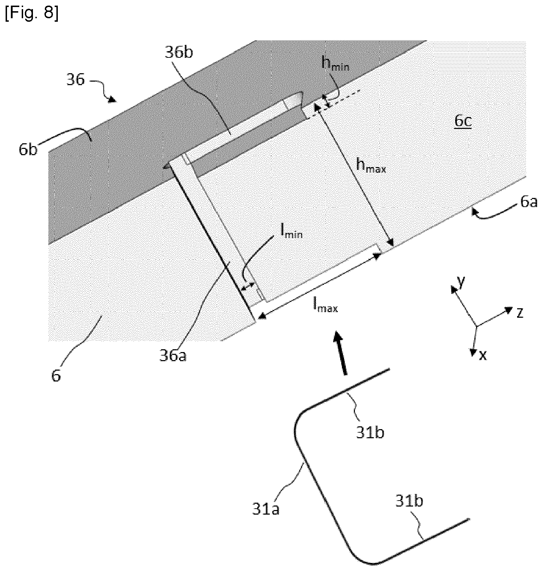

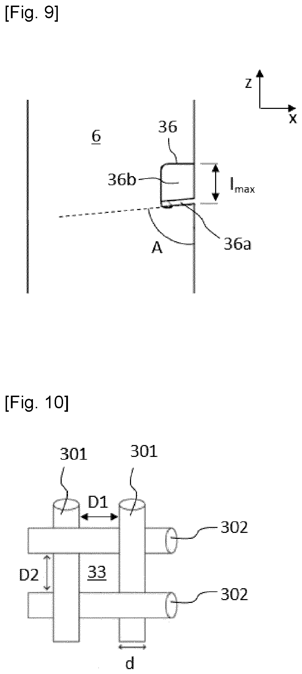

Selon une autre possibilité, illustrée sur [Fig. 8] et [Fig. 9], au moins un évidement 36 est comprenant une première portion 36a ménagée sur toute la hauteur de la barre 6 et sur une largeur minimale lₘᵢₙ inférieure à la largeur maximale lₘₐₓ de l'orifice. La largeur minimale lₘᵢₙ, mesurée parallèlement à la direction longitudinale z, est de préférence égale ou sensiblement égale, de préférence légèrement supérieure, à l'épaisseur du matériau en feuille formant le dispositif filtrant 31. En particulier, la première portion 36a forme une rainure conformée pour recevoir la face avant 31a d'un dispositif filtrant 31 en son extrémité 32.

L'évidement 36 comprend en outre au moins une deuxième portion 36b pratiquée sur une partie seulement hₘᵢₙ de la hauteur de la barre 6 et s'étendant sur la largeur maximale lₘₐₓ de l'évidement. De préférence, la hauteur hₘᵢₙ, mesurée parallèlement à la direction d'empilement y, est égale ou sensiblement égale, de préférence légèrement supérieure, à l'épaisseur du matériau en feuille formant le dispositif filtrant 31. En particulier, la deuxième portion 36b est adaptée à recevoir une face latérale 31b d'un dispositif filtrant 31 en son extrémité 32. Ce mode de réalisation permet un bon maintien du dispositif filtrant dans l'évidement 36. De préférence, l'évidement 36 comprend deux deuxièmes portions 36b aménagés au niveau de chaque surface 6a, 6b parallèles aux plaques 2 de la barre 6. L'évidement 36 est ainsi conformé pour recevoir l'extrémité 32 d'un dispositif filtrant ayant une face avant 31a et deux faces latérales 31b.

Notons que la première portion 36a et la deuxième portion 36b de l'évidement sont réalisées sur une profondeur prédéterminée suivant la direction latérale x. L'évidement présente, dans un plan de coupe parallèle aux plaques 2, des profils transversaux de dimensions différentes selon qu'on se situe au niveau de la première portion ou de la deuxième portion. Les profils transversaux de la première et/ou de la deuxième portion peuvent être de forme carrée ou rectangulaire.

Notons que la première portion 36a peut s'étendre, dans un plan de coupe parallèle aux plaques 2, perpendiculairement à la direction longitudinale z ou bien former un angle A compris entre 88 et 82° par rapport à la direction longitudinale z. La présence d'un angle permet d'induire une légère déformation de l'extrémité 32 du dispositif filtrant 31 lors de son insertion dans l'évidement 36, ce qui le bloque en position.

Les évidements 36 ont une largeur Iₘₐₓ, mesurée parallèlement à la direction longitudinale z, égale ou sensiblement égale, de préférence légèrement inférieure, à la largeur du dispositif filtrant 31. Les évidements 36 peuvent avoir une profondeur prédéterminée, mesurée parallèlement à la direction latérale x, comprise entre 10 et 20 % de la largeur des barres 6. En particulier, les évidements 36 ont une profondeur comprise entre 2 et 7 mm, de préférence entre 4 et 6 mm, idéalement environ 5 mm. Ces dimensions offrent un bon compromis entre facilité d'usinage des barres, encastrement du dispositif filtrant et réduction de largeur des barres. De préférence, la longueur du dispositif filtrant, mesurée suivant la direction latérale x, est comprise entre la largeur du passage et la largeur du passage à laquelle on ajoute le double de la profondeur d'un évidement.

La largeur et la profondeur des évidements 36 est définie notamment de manière à garantir une étanchéité vis-à-vis des particules de catalyseur, en tenant compte de leur taille et de la forme pour qu'elles ne puissent pas progresser dans les espaces résiduels formés entre le dispositif filtrant et les barres 6. De préférence, il existe un deuxième jeu, correspondant à la différence entre la largeur du dispositif filtrant 31 et la largeur d'un évidement, inférieur à 0,5 mm, en particulier inférieur à 0,1 mm. Notons que dans le cas d'un évidement à plusieurs portions 36a, 36b, les largeurs du dispositif filtrant et de l'évidement s'entendent des largeurs mesurées au niveau des portions concernées. De préférence le deuxième jeu est nul. La profondeur des évidements, qui correspond à la longueur des extrémités 32 engagées dans les évidements, est définie de façon à assurer un maintien suffisant du dispositif filtrant dans les évidements.

La présente invention est particulièrement avantageuse lorsqu'elle est mise en oeuvre dans un échangeur de chaleur à plaques et ailettes brasées, du fait de sa simplicité de mise en oeuvre et d'assemblage. Notons que d'autres types d'échangeurs peuvent toutefois être utilisés, tels des échangeurs à plaques, des échangeurs à tubes et à calandre (« shell and tube » en anglais), ou des assemblages de type « core in kettle », c'est-à-dire des échangeurs à plaques ou à plaques et ailettes noyés dans une calandre dans laquelle se vaporise le fluide frigorigène. Dans le cas où les échangeurs sont des échangeurs à tubes, les premiers et deuxièmes passages peuvent être formés par les espaces dans, autour et entre les tubes.

De préférence, lorsque le matériau métallique en feuille est une toile métallique ou une plaque microperforée, il présente une densité surfacique d'ouverture allant de 15 à 35 %, de préférence de 17 à 22%. La densité surfacique d'ouverture, i. e. la transparence de la toile ou de la plaque, est définie comme le rapport de l'aire des ouvertures ou des perforations à l'aire totale de la toile ou de la plaque microperforée respectivement. Ces plages de valeurs offrent un bon compromis entre rigidité du matériau, ce qui lui confère une bonne résistance mécanique, et transparence au fluide afin de minimiser les pertes de charges.

S'agissant des matériaux métalliques en feuille autres qu'une toile métallique ou une plaque microperforée, ils présentent de préférence une densité volumique de pores, i. e. une porosité, d'au moins 75%, de préférence encore supérieure à 90%, et avantageusement inférieure ou égale à 98%. Ces plages de valeurs permettent de retenir les fines particules solides tout en offrant une bonne résistance mécanique ainsi qu'une perte de charges modérée pour le fluide. A noter que la densité volumique de pores est définie comme le rapport entre le volume des vides du matériau et le volume total du matériau. Notons que les vides s'entendent de pores ouverts, c'est-à-dire communiquant fluidiquement avec l'environnement extérieur dans lequel se trouve le matériau.

Selon un mode de réalisation préféré de l'invention, le matériau métallique en feuille 30 est une toile métallique formée de fils métalliques 301, 302. Plus précisément, le matériau comprend un entrelacement d'au moins une série de premiers fils 301 métalliques avec une série de deuxièmes fils 302 métalliques de façon à former des mailles 33 ouvertes. Selon le mode de tissage des fils, les mailles peuvent être de forme carrée, rectangulaire ou triangulaire. Les premiers fils 301 et deuxièmes fils 302 métalliques peuvent présenter des caractéristiques identiques, i. e. matériau, diamètre..., mais pas nécessairement.

[Fig.10] schématise un exemple de tissage dans lequel les premiers fils et deuxièmes fils se croisent alternativement un dessous et un dessus. D'autres tissages sont possible, par exemple des fils se croisant alternativement deux dessous et deux dessus, un dessous et deux dessus...

Rappelons que les caractéristiques énoncées dans la présente demande pour une toile s'appliquent aussi au cas où les fils sont assemblés par soudage.

L'utilisation d'une toile métallique permet un contrôle précis et reproductible des caractéristiques du filtre, grâce à la géométrie des mailles qui est parfaitement contrôlée lors de l'opération de tissage. La régularité des mailles offre un degré de transparence du filtre homogène sur toute sa surface, ce qui évite de nuire aux performances de l'échangeur grâce à une répartition homogène du débit de fluide à travers le filtre. En outre, la toile métallique permet d'obtenir une densité surfacique d'ouverture définie par les mailles pour bloquer de façon optimale les particules visées et limiter les pertes de charges pour le fluide la traversant. Il offre également de bonnes propriétés de planéité, ce qui permet d'assembler la toile sans déformation excessive entre les barres de fermetures, notamment lorsque le dispositif filtrant est agencé dans un évidement d'une barre de fermeture.

De préférence, lesdits fils 301, 302 ont un diamètre d allant de 0,10 à 0,30 mm, en particulier de 0,10 à 0,25 mm, ce qui permet de conférer à la toile une bonne tenue mécanique par la résistance à la traction de ses fils. De préférence encore, lesdits fils peuvent avoir un diamètre allant de 0,12 à 0,18 mm.

Chaque maille 33 étant délimitée entre deux premiers fils 301 consécutifs et deux deuxièmes fils 302 consécutifs, les mailles ayant de préférence une ouverture de 0,07 mm à 0,15 mm. Le dimensionnement de l'ouverture des mailles est défini de telle manière à retenir les particules solides de taille supérieure que l'on veut arrêter.

Dans le cas de mailles carrées ou rectangulaires, comme montré sur [Fig. 10], l'ouverture de maille est définie comme la distance D1 entre deux premiers fils 301 consécutifs et/ou la distance D2 entre deux deuxièmes fils 302 consécutifs. Dans le cas de mailles triangulaires (non illustré), l'ouverture de maille est définie comme le diamètre de la sphère tangente insérée dans la maille.

De préférence, le matériau métallique en feuille 30 a une épaisseur allant de 0,2 à 0,75 mm. Cette épaisseur confère au matériau une tenue mécanique suffisante. Pour une toile métallique, l'épaisseur résulte du diamètre des fils et du mode d'assemblage des mailles constituées.

Selon une possibilité, le matériau métallique en feuille est un fritté de poudres ou de fibres métalliques. En particulier, on peut utiliser des poudres d'acier inoxydable ou de bronze qui sont liées par diffusion atomique à une température inférieure à la température de fusion du matériau.

Selon une autre possibilité, le matériau métallique en feuille est une plaque microperforée d'une pluralité d'orifices de forme préférentiellement circulaire dont le diamètre est avantageusement compris entre 0,07 mm et 0,15 mm. De préférence, la plaque présente une épaisseur comprise entre 0,2 mm et 0,5 mm. De préférence, les orifices sont répartis de façon uniforme sur la plaque microperforée.

Selon une autre possibilité, le matériau métallique en feuille est une mousse formée d'un matériau métallique. De préférence, la mousse métallique présente une densité volumique de pores d'au moins 75%, de préférence encore supérieure à 90%, pour laisser passer le fluide avec un niveau de pertes de charge raisonnable. De préférence, les pores de la mousse métallique ont une dimension comprise entre 0,04 et 0,15 mm. De préférence, la dimension des pores s'entend de leur diamètre équivalent. Par « diamètre équivalent » d'un pore non sphérique, on entend le diamètre de la sphère de même volume que ledit pore.

La présente invention est particulièrement avantageuse dans le cas où l'échangeur est un échangeur-réacteur, i. e. échangeur catalytique, configuré pour la mise en oeuvre de réactions catalytiques entre le premier fluide F1 et au moins un matériau catalyseur, les passages de la première série contenant ledit au moins un matériau catalyseur sous forme de particules. En particulier, l'échangeur est configuré pour le refroidissement, voire la liquéfaction d'au moins une partie de l'hydrogène en tant que premier fluide F1, le matériau catalyseur étant configuré pour la conversion de l'ortho-hydrogène en para-hydrogène, en particulier le matériau catalyseur est un catalyseur comprenant un oxyde métallique, de préférence de l'oxyde de fer (Fe₂O₃). En fonctionnement, l'hydrogène est introduit à l'état gazeux par le premier collecteur d'entrée 21 et s'écoule dans les premiers passages 10 pour y être refroidi contre un courant d'azote liquide s'écoulant dans les deuxième passages 20. Au moins une partie des molécules du courant d'hydrogène gazeux est convertie de la forme ortho et à la forme para au moyen du matériau catalyseur. L'hydrogène est évacué refroidi, voire liquéfié en tout ou partie, par le premier collecteur de sortie 22.

De préférence, le matériau catalyseur comprend des particules ayant un diamètre équivalent allant d'un diamètre minimal de particules à un diamètre maximal de particules. De préférence, le diamètre minimal est compris entre 0,2 et 0,4 mm. De préférence, le diamètre maximal est compris entre 0,5 et 0,7 mm. De préférence encore, les particules du matériau catalyseur présentent un diamètre équivalent allant de 0,2 à 0,7 mm.

De préférence, le matériau métallique en feuille 30 est un tissé de fils métalliques ayant une ouverture de maille représentant entre 30% et 70% du diamètre minimal des particules. Ces ratios sont définis de façon à arrêter les très fines particules ou poussières issues de l'abrasion des particules de catalyseur lors du remplissage ou en fonctionnement, tout en offrant un compromis satisfaisant du point de vue des pertes de charges

Par « diamètre équivalent » d'une particule non sphérique, on entend dans la présente demande le diamètre de la sphère de même volume que ladite particule.

L'invention concerne également un procédé d'assemblage d'un échangeur catalytique dont la mise en oeuvre est rendue plus simple et mieux contrôlée grâce à l'invention. Un dispositif filtrant 31 est agencé dans tout ou partie des passages 10 du côté de la surface de sortie 12. Le corps 1 est brasé afin de lier entre eux les éléments constitutifs de l'échangeurs tels que les plaques, les barres, les structures d'échange, les structures de distribution le cas échéant. L'empilement brasé est positionné verticalement et le collecteur de sortie 22 est assemblé en-dessous du corps en suivant la direction verticale ascendante z. On procède ensuite au remplissage des passages 10 avec le catalyseur. Les dispositifs filtrants 31 positionnés en partie inférieure du corps retiennent le catalyseur. Le remplissage peut éventuellement être réalisé au moyen d'un bac, qui peut être de forme rectangulaire, positionné sur le corps d'échange 1, de façon à faire face aux ouvertures de passages à remplir. Le bac est retiré une fois le remplissage terminé. Le premier collecteur d'entrée 21 est assemblé.

En outre, l'échangeur peut comprendre un dispositif filtrant 31 agencé du côté de la surface d'entrée 11. On agence un dispositif filtrant 31 dans tout ou partie des passages 10 du côté de la surface d'entrée 11. Le corps 1 est brasé puis le premier collecteur d'entrée 21 est assemblé sur le corps 1.

Notons que dans le cadre de l'invention, l'assemblage du ou des dispositifs filtrants est de préférence réalisé sur le corps 1 avant son brasage. De préférence, les collecteurs sont assemblés par soudage sur le corps 1 brasé.

Ce procédé d'assemblage est particulièrement bien adapté aux échangeurs dont des passages doivent être remplis de particules de catalyseur. Le remplissage des passages avec les particules de catalyseur est effectué après que le corps d'échange muni du dispositif filtrant et du collecteur de sortie ait été positionné verticalement, ce qui permet un remplissage gravitaire avec le catalyseur et un meilleur contrôle de la répartition du catalyseur entre les différents passages.

Notons que pour un échangeur dans lequel on souhaite éviter l'intrusion de poussières venant du circuit amont de fluide, l'agencement d'un dispositif filtrant du côté du collecteur de sortie de l'échangeur est optionnel. Notons par ailleurs que d'autres dispositifs filtrants conformes à l'invention peuvent également être agencés de façon à assurer une ou plusieurs des fonctions décrites dans la présente demande pour les deuxième passages 20.

## Revendications

1. Echangeur de chaleur comprenant un empilement de plusieurs plaques (2) parallèles entre elles et à une direction longitudinale (z), lesdites plaques (2) étant empilées avec espacement de façon à définir entre elles une première série de passages (10) pour l'écoulement d'au moins un premier fluide suivant une direction globale d'écoulement parallèle à la direction longitudinale (z), chaque passage (10) étant délimité par des barres de fermetures (6) disposées entre les plaques (2),
**caractérisé en ce qu'**un dispositif filtrant (31) est agencé dans au moins un passage (10) de la première série, ledit dispositif filtrant (31) s'étendant d'une part entre deux plaques (2) adjacentes définissant ledit passage (10) et d'autre part entre deux des barres de fermetures (6) délimitant ledit passage (10), ledit dispositif filtrant (31) comprenant un matériau métallique en feuille (30) choisi parmi une toile métallique, un non-tissé de fibres métalliques, un fritté de poudre métallique ou de fibres métalliques, une mousse métallique, une plaque microperforée.

2. Echangeur selon la revendication 1, **caractérisé en ce qu'**il comprend au moins un premier collecteur d'entrée ou de sortie (21, 22) configuré pour l'introduction ou la récupération du premier fluide dans ou depuis les premiers passages (10), une structure de distribution (24) et une structure d'échange (25) étant agencées consécutivement depuis le premier collecteur d'entrée ou de sortie (21, 22) dans ledit au moins un passage (10), le dispositif filtrant (31) étant agencé entre la structure de distribution (24) et la structure d'échange (25).

3. Echangeur selon la revendication 1, **caractérisé en ce qu'**il comprend au moins un premier collecteur d'entrée ou de sortie (21, 22) configuré pour l'introduction ou la récupération du premier fluide dans ou depuis les premiers passages (10), une structure de distribution (24) et une structure d'échange (25) étant agencées consécutivement depuis le premier collecteur d'entrée ou de sortie (21, 22) dans ledit au moins un passage (10), le dispositif filtrant (31) étant agencé entre la structure de distribution (24) et le premier collecteur d'entrée ou de sortie (21, 22).

4. Echangeur selon l'une des revendications 2 ou 3, **caractérisé en ce que** ledit au moins un passage (10) comprend une ouverture d'entrée ou de sortie (11,12) débouchant dans ledit premier collecteur d'entrée ou de sortie (21, 22), ledit au moins un passage (10) ayant une largeur mesurée parallèlement à une direction latérale (x) qui est perpendiculaire à la direction longitudinale (z) et orthogonale aux plaques (2), la largeur de l'ouverture d'entrée ou de sortie (11,12), mesurée parallèlement à la direction latérale (x) représente entre 10 et 70%, de préférence entre 20 et 50 %, de la largeur du passage (10).

5. Echangeur selon l'une des revendications précédentes, **caractérisé en ce que** le dispositif filtrant (31) comprend deux extrémités (32) agencées chacune dans un évidement (36) respectif d'une barre de fermeture (6).

6. Echangeur selon la revendication 5, **caractérisé en ce que** ledit évidement (36) présente une largeur maximale (lₘₐₓ) mesurée parallèlement à la direction longitudinale (z) et comprend une première portion (36a) ménagée sur une hauteur maximale (hₘₐₓ) correspondant à la hauteur de la barre (6), lesdites hauteurs étant mesurées parallèlement à une direction d'empilement (y) perpendiculaire aux directions longitudinale (z) et latérale (x), ladite première portion (36a) étant ménagée sur une largeur minimale (lₘᵢₙ) inférieure à (lₘₐₓ), ledit évidement (36) comprenant en outre au moins une deuxième portion (36b) ménagée sur une hauteur minimale (hₘᵢₙ) inférieure à la hauteur maximale (hₘₐₓ) et s'étendant sur la largeur maximale (lₘₐₓ).

7. Echangeur selon l'une des revendications précédentes, **caractérisé en ce que** le dispositif filtrant (31) comprend au moins une face avant (31a) agencée perpendiculairement à la direction globale d'écoulement du premier fluide, ladite face avant (31a) étant reliée à au moins une face latérale (31b) agencée parallèlement à une plaque (2).

8. Echangeur selon l'une des revendications précédentes, **caractérisé en ce que** le dispositif filtrant (31) présente une largeur totale, mesurée parallèlement à la direction longitudinale (z), comprise entre 2 et 10 mm, de préférence entre 3 et 7 mm.

9. Echangeur selon l'une des revendications précédentes, **caractérisé en ce que** le matériau métallique en feuille (30) présente une épaisseur de 0,20 à 0,75 mm, de préférence comprise entre 0,3 et 0,5 mm.

10. Echangeur selon l'une des revendications précédentes, **caractérisé en ce que** le matériau métallique en feuille (30) présente une densité surfacique d'ouverture allant de 15 à 35 % ou une densité volumique de pores allant de 75 à 98 %.

11. Echangeur selon l'une des revendications précédentes, **caractérisé en ce que** le matériau métallique en feuille (30) est un tissé de fils métalliques (301, 302), lesdits fils (301, 302) ayant un diamètre de 0,10 à 0,30 mm, de préférence de 0,10 à 0,25 mm.

12. Echangeur selon l'une des revendications précédentes, **caractérisé en ce que** le matériau métallique en feuille (30) comprend au moins une série de premiers fils (301) métalliques et une série de deuxièmes fils (302) entrelacés de façon à former des mailles (33), chaque maille (33) étant délimitée entre deux premiers fils (301) consécutifs et deux deuxièmes fils (302) consécutifs, les mailles (33) ayant une ouverture de 0,07 mm à 0,15 mm.

13. Echangeur selon l'une des revendications 1 à 10, **caractérisé en ce que** le matériau métallique en feuille est une plaque microperforée d'une pluralité d'orifices dont la dimension, mesurée dans un plan parallèle aux plaques (2) et au plus comprise entre 0,07 mm et 0,15 mm.

14. Echangeur selon l'une des revendications précédentes, **caractérisé en ce que** l'échangeur est un échangeur-réacteur configuré pour la mise en oeuvre de réactions catalytiques entre le premier fluide (F1) et au moins un matériau catalyseur, au moins une partie des passages (10) de la première série contenant des particules dudit au moins un matériau catalyseur.

15. Echangeur selon la revendication 14, **caractérisé en ce que** le matériau catalyseur comprend des particules ayant un diamètre équivalent allant d'un diamètre minimal à un diamètre maximal, le matériau métallique en feuille (30) étant un tissé de fils métalliques (301, 302) ayant une ouverture de maille allant de 10 à 85 % dudit diamètre minimal des particules.

16. Echangeur selon l'une des revendications 14 ou 15, **caractérisé en ce qu'**il est configuré pour la liquéfaction de l'hydrogène en tant que premier fluide (F1), le matériau catalyseur étant configuré pour la conversion de l'ortho-hydrogène en para-hydrogène, en particulier le matériau catalyseur est de l'oxyde de fer (Fe₂O₃).

## Patentansprüche

1. Wärmetauscher, welcher einen Stapel von mehreren Platten (2) umfasst, die zueinander und zu einer Längsrichtung (z) parallel sind, wobei die Platten (2) mit Zwischenraum gestapelt sind, so dass sie zwischen sich eine erste Reihe von Kanälen (10) für das Strömen mindestens eines ersten Fluids in einer allgemeinen Strömungsrichtung, die zur Längsrichtung (z) parallel ist, definieren, wobei jeder Kanal (10) von Verschlussstangen (6) begrenzt wird, die zwischen den Platten (2) angeordnet sind,
**dadurch gekennzeichnet, dass** eine Filtervorrichtung (31) in mindestens einem Kanal (10) der ersten Reihe angeordnet ist, wobei sich die Filtervorrichtung (31) einerseits zwischen zwei benachbarten Platten (2) erstreckt, die den Kanal (10) definieren, und andererseits zwischen zwei Verschlussstangen (6), die den Kanal (10) begrenzen, wobei die Filtervorrichtung (31) ein metallisches blattförmiges Material (30) umfasst, das aus einem Metallgewebe, einem Metallfaservlies, einem Sintermaterial aus Metallpulver oder Metallfasern, einem Metallschaumstoff und einer mikroperforierten Platte ausgewählt ist.

2. Wärmetauscher nach Anspruch 1, **dadurch gekennzeichnet, dass** er mindestens einen ersten Eintritts- oder Austrittssammler (21, 22) umfasst, der für die Einleitung oder die Wiedergewinnung des ersten Fluids in die oder aus den ersten Kanäle(n) (10) ausgelegt ist, wobei eine Verteilungsstruktur (24) und eine Austauschstruktur (25) vom ersten Eintritts- oder Austrittssammler (21, 22) aus nacheinander in dem mindestens einen Kanal (10) angeordnet sind, wobei die Filtervorrichtung (31) zwischen der Verteilungsstruktur (24) und der Austauschstruktur (25) angeordnet ist.

3. Wärmetauscher nach Anspruch 1, **dadurch gekennzeichnet, dass** er mindestens einen ersten Eintritts- oder Austrittssammler (21, 22) umfasst, der für die Einleitung oder die Wiedergewinnung des ersten Fluids in die oder aus den ersten Kanäle(n) (10) ausgelegt ist, wobei eine Verteilungsstruktur (24) und eine Austauschstruktur (25) vom ersten Eintritts- oder Austrittssammler (21, 22) aus nacheinander in dem mindestens einen Kanal (10) angeordnet sind, wobei die Filtervorrichtung (31) zwischen der Verteilungsstruktur (24) und dem ersten Eintritts- oder Austrittssammler (21, 22) angeordnet ist.

4. Wärmetauscher nach einem der Ansprüche 2 oder 3, **dadurch gekennzeichnet, dass** der mindestens eine Kanal (10) eine Eintritts- oder Austrittsöffnung (11, 12) umfasst, die in den ersten Eintritts- oder Austrittssammler (21, 22) mündet, wobei der mindestens eine Kanal (10) eine Breite aufweist, die parallel zu einer seitlichen Richtung (x) gemessen wird, welche senkrecht zur Längsrichtung (z) und orthogonal zu den Platten (2) ist, wobei die parallel zu der seitlichen Richtung (x) gemessene Breite der Eintritts- oder Austrittsöffnung (11, 12) zwischen 10 und 70 %, vorzugsweise zwischen 20 und 50 % der Breite des Kanals (10) beträgt.

5. Wärmetauscher nach einem der vorhergehenden Ansprüche, **dadurch gekennzeichnet, dass** die Filtervorrichtung (31) zwei Enden (32) umfasst, die jeweils in einer jeweiligen Vertiefung (36) einer Verschlussstange (6) angeordnet sind.

6. Wärmetauscher nach Anspruch 5, **dadurch gekennzeichnet, dass** die Vertiefung (36) eine parallel zur Längsrichtung (z) gemessene maximale Breite (lₘₐₓ) aufweist und einen ersten Abschnitt (36a) umfasst, der auf einer der Höhe der Stange (6) entsprechenden maximalen Höhe (hₘₐₓ) ausgebildet ist, wobei diese Höhen parallel zu einer Stapelungsrichtung (y) gemessen werden, die zur Längsrichtung (z) und seitlichen Richtung (x) senkrecht ist, wobei der erste Abschnitt (36a) auf einer minimalen Breite (lₘᵢₙ) ausgebildet ist, die kleiner als (lₘₐₓ) ist, wobei die Vertiefung (36) außerdem mindestens einen zweiten Abschnitt (36b) umfasst, der auf einer minimalen Höhe (hₘᵢₙ), die kleiner als die maximale Höhe (hₘₐₓ) ist, ausgebildet ist und sich über die maximale Breite (lₘₐₓ) erstreckt.

7. Wärmetauscher nach einem der vorhergehenden Ansprüche, **dadurch gekennzeichnet, dass** die Filtervorrichtung (31) mindestens eine Vorderfläche (31a) umfasst, die senkrecht zur allgemeinen Strömungsrichtung des ersten Fluids angeordnet ist, wobei die Vorderfläche (31a) mit mindestens einer Seitenfläche (31b) verbunden ist, die parallel zu einer Platte (2) angeordnet ist.

8. Wärmetauscher nach einem der vorhergehenden Ansprüche, **dadurch gekennzeichnet, dass** die Filtervorrichtung (31) eine parallel zur Längsrichtung (z) gemessene Gesamtbreite zwischen 2 und 10 mm, vorzugsweise zwischen 3 und 7 mm aufweist.

9. Wärmetauscher nach einem der vorhergehenden Ansprüche, **dadurch gekennzeichnet, dass** das metallische blattförmige Material (30) eine Dicke von 0,20 bis 0,75 mm, vorzugsweise zwischen 0,3 und 0,5 mm aufweist.

10. Wärmetauscher nach einem der vorhergehenden Ansprüche, **dadurch gekennzeichnet, dass** das metallische blattförmige Material (30) eine Oberflächendichte der Öffnungen von 15 bis 35 % oder eine Porenvolumendichte von 75 bis 98 % aufweist.

11. Wärmetauscher nach einem der vorhergehenden Ansprüche, **dadurch gekennzeichnet, dass** das metallische blattförmige Material (30) ein Gewebe aus Metalldrähten (301, 302) ist, wobei die Drähte (301, 302) einen Durchmesser von 0,10 bis 0,30 mm, vorzugsweise von 0,10 bis 0,25 mm aufweisen.

12. Wärmetauscher nach einem der vorhergehenden Ansprüche, **dadurch gekennzeichnet, dass** das metallische blattförmige Material (30) mindestens eine Reihe von ersten Metalldrähten (301) und eine Reihe von zweiten Drähten (302) umfasst, die so miteinander verflochten sind, dass Maschen (33) gebildet werden, wobei jede Masche (33) zwischen zwei ersten aufeinander folgenden Drähten (301) und zwei zweiten aufeinander folgenden Drähten (302) begrenzt ist, wobei die Maschen (33) eine Weite von 0,07 mm bis 0,15 mm aufweisen.

13. Wärmetauscher nach einem der Ansprüche 1 bis 10, **dadurch gekennzeichnet, dass** das metallische blattförmige Material eine mikroperforierte Platte mit einer Vielzahl von Löchern ist, deren Abmessung, in einer zu den Platten (2) parallelen Ebene gemessen, höchstens zwischen 0,07 mm und 0,15 mm liegt.

14. Wärmetauscher nach einem der vorhergehenden Ansprüche, **dadurch gekennzeichnet, dass** der Wärmetauscher ein Wärmetauscherreaktor ist, der für die Durchführung von katalytischen Reaktionen zwischen dem ersten Fluid (F1) und mindestens einem Katalysatormaterial ausgelegt ist, wobei wenigstens ein Teil der Kanäle (10) der ersten Reihe Partikel des mindestens einen Katalysatormaterials enthält.

15. Wärmetauscher nach Anspruch 14, **dadurch gekennzeichnet, dass** das Katalysatormaterial Partikel mit einem äquivalenten Durchmesser umfasst, der von einem minimalen Durchmesser bis zu einem maximalen Durchmesser reicht, wobei das metallische blattförmige Material (30) ein Gewebe aus Metalldrähten (301, 302) mit einer Maschenweite ist, die 10 bis 85 % des minimalen Durchmessers der Partikel beträgt.

16. Wärmetauscher nach einem der Ansprüche 14 oder 15, **dadurch gekennzeichnet, dass** er für die Verflüssigung von Wasserstoff als dem ersten Fluid (F1) ausgelegt ist, wobei das Katalysatormaterial für die Umwandlung von Ortho-Wasserstoff in Para-Wasserstoff ausgelegt ist und insbesondere das Katalysatormaterial Eisenoxid (FezOs) ist.

## Claims

1. Heat exchanger comprising a stack of multiple plates (2) which are parallel to one another and to a longitudinal direction (z), said plates (2) being stacked spaced apart from one another so as to define, between one another, a first series of passages (10) for the flow of at least a first fluid in an overall flow direction parallel to the longitudinal direction (z), each passage (10) being delimited by closure bars (6) disposed between the plates (2),
**characterized in that** a filtering device (31) is arranged in at least one passage (10) of the first series, said filtering device (31) extending for the one part between two adjacent plates (2) defining said passage (10) and for the other part between two of the closure bars (6) delimiting said passage (10), said filtering device (31) comprising a metal sheet material (30) chosen from among a metal fabric, a nonwoven of metal fibres, a sintered metal powder or sintered metal fibres, a metal foam, or a microperforated plate.

2. Heat exchanger according to Claim 1, **characterized in that** it comprises at least a first inlet or outlet manifold (21, 22) configured for introducing the first fluid into or collecting the first fluid from the first passages (10), a distribution structure (24) and a heat-exchange structure (25) being arranged consecutively from the first inlet or outlet manifold (21, 22) in said at least one passage (10), the filtering device (31) being arranged between the distribution structure (24) and the heat-exchange structure (25).

3. Heat exchanger according to Claim 1, **characterized in that** it comprises at least a first inlet or outlet manifold (21, 22) configured for introducing the first fluid into or collecting the first fluid from the first passages (10), a distribution structure (24) and a heat-exchange structure (25) being arranged consecutively from the first inlet or outlet manifold (21, 22) in said at least one passage (10), the filtering device (31) being arranged between the distribution structure (24) and the first inlet or outlet manifold (21, 22).

4. Heat exchanger according to either of Claims 2 and 3, **characterized in that** said at least one passage (10) comprises an inlet or outlet opening (11, 12) leading into said first inlet or outlet manifold (21, 22), said at least one passage (10) having a width measured parallel to a lateral direction (x) which is perpendicular to the longitudinal direction (z) and orthogonal to the plates (2), the width of the inlet or outlet opening (11, 12), measured parallel to the lateral direction (x), constituting between 10% and 70%, preferably between 20% and 50%, of the width of the passage (10).

5. Heat exchanger according to one of the preceding claims, **characterized in that** the filtering device (31) comprises two ends (32), each of which is arranged in a respective recess (36) in a closure bar (6).

6. Heat exchanger according to Claim 5, **characterized in that** said recess (36) has a maximum width (lₘₐₓ) measured parallel to the longitudinal direction (z) and comprises a first portion (36a) formed over a maximum height (hₘₐₓ) corresponding to the height of the bar (6), said heights being measured parallel to a stacking direction (y) perpendicular to the longitudinal direction (z) and lateral direction (x), said first portion (36a) being formed over a minimum width (lₘᵢₙ) less than (lₘₐₓ), said recess (36) moreover comprising at least one second portion (36b) formed over a minimum height (hₘᵢₙ) less than the maximum height (hₘₐₓ) and extending over the maximum width (lₘₐₓ).

7. Heat exchanger according to one of the preceding claims, **characterized in that** the filtering device (31) comprises at least one front face (31a) arranged perpendicularly to the overall flow direction of the first fluid, said front face (31a) being connected to at least one lateral face (31b) arranged parallel to a plate (2) .

8. Heat exchanger according to one of the preceding claims, **characterized in that** the filtering device (31) has a total width, measured parallel to the longitudinal direction (z), of between 2 and 10 mm, preferably between 3 and 7 mm.

9. Heat exchanger according to one of the preceding claims, **characterized in that** the metal sheet material (30) has a thickness of 0.20 to 0.75 mm, preferably of between 0.3 and 0.5 mm.

10. Heat exchanger according to one of the preceding claims, **characterized in that** the metal sheet material (30) has an open surface density ranging from 15% to 35% or a volume density of pores ranging from 75% to 98%.

11. Heat exchanger according to one of the preceding claims, **characterized in that** the metal sheet material (30) is a woven fabric of metal threads (301, 302), said threads (301, 302) having a diameter of 0.10 to 0.30 mm, preferably of 0.10 to 0.25 mm.

12. Heat exchanger according to one of the preceding claims, **characterized in that** the metal sheet material (30) comprises at least one series of first metal threads (301) and a series of second threads (302) interlaced so as to form meshes (33), each mesh (33) being delimited between two consecutive first threads (301) and two consecutive second threads (302), the meshes (33) having an opening size of 0.07 mm to 0.15 mm.

13. Heat exchanger according to one of Claims 1 to 10, **characterized in that** the metal sheet material is a microperforated plate having a plurality of orifices the size of which, measured in a plane parallel to the plates (2), is at most between 0.07 mm and 0.15 mm.

14. Heat exchanger according to one of the preceding claims, **characterized in that** the heat exchanger is an exchanger-reactor configured to implement catalytic reactions between the first fluid (F1) and at least one catalyst material, at least some of the passages (10) of the first series containing particles of said at least one catalyst material.

15. Heat exchanger according to Claim 14, **characterized in that** the catalyst material comprises particles having an equivalent diameter ranging from a minimum diameter to a maximum diameter, the metal sheet material (30) being a woven fabric of metal threads (301, 302) with a mesh opening size ranging from 10% to 85% of said minimum diameter of the particles.

16. Heat exchanger according to either of Claims 14 and 15, **characterized in that** it is configured for the liquefaction of hydrogen as first fluid (F1), the catalyst material being configured for the conversion of ortho-hydrogen to para-hydrogen, in particular the catalyst material is iron oxide (Fe₂O₃).
